Europäisches Patentamt

(19) European Patent Office

Office européen des brevets

(11) Numéro de publication : **0 324 446 B1**

## (12) FASCICULE DE BREVET EUROPEEN

(45) Date de publication du fascicule du brevet :
**18.12.91 Bulletin 91/51**

(21) Numéro de dépôt : **89100400.4**

(22) Date de dépôt : **11.01.89**

(51) Int. Cl.⁵ : **A47J 31/057**

(54) **Cafetière ménagère.**

(30) Priorité : **14.01.88 FR 880384**

(43) Date de publication de la demande :
**19.07.89 Bulletin 89/29**

(45) Mention de la délivrance du brevet :
**18.12.91 Bulletin 91/51**

(84) Etats contractants désignés :
**AT BE CH DE ES GB IT LI NL SE**

(73) Titulaire : **MOULINEX**
**11, rue Jules-Ferry**
**F-93171 Bagnolet (FR)**

(72) Inventeur : **Landais, Francis, Pierre, Jacques**
**Société Moulinex 25 Route de Mamers**
**F-61000 Alençon (FR)**

(74) Mandataire : **May, Hans Ulrich, Dr.**
**Patentanwalt Dr. H.U. May Thierschstrasse 27**
**W-8000 München 22 (DE)**

## Description

L'invention se rapporte aux cafetières ménagères comprenant, dans un boîtier, un réservoir d'eau froide ainsi qu'un chauffe-eau alimenté par ce réservoir et alimentant lui-même, par un tube d'eau chaude, une goulotte d'arrosage destinée à arroser un filtre qui contient de la poudre de café et qui est situé, en position de travail, sous cette goulotte, et au-dessus d'un récipient collecteur d'infusion.

Elle concerne plus précisément les cafetières dont la goulotte présente un orifice principal destiné à arroser la région centrale du filtre, lorsque ce filtre est placé en position de travail, ainsi qu'une série de trous répartis autour dudit orifice central et destinés à arroser la zone périphérique dudit filtre. Une telle cafetière est exposée dans DE-A-2751310.

On comprend qu'avec une telle répartition du trou et des orifices dans la goulotte, la poudre de café est arrosée en permanence sur toute sa surface et donc dans toute sa masse, depuis le commencement de l'arrivée d'eau chaude dans la goulotte jusqu'à la fin de la préparation de l'infusion. Or, on a constaté qu'une telle disposition occasionne un arrosage trop abondant de cette masse de poudre de café qui subit alors un "lessivage" violent et trop rapide ne permettant pas d'extraire le maximum d'arôme pour confectionner une excellente infusion de café.

L'invention a pour but de remédier à cet inconvénient en apportant un perfectionnement au dispositif d'arrosage.

Selon l'invention, la goulotte est équipée d'un clapet qui est commandé par un dispositif de temporisation et qui peut occuper, soit une position d'obturation de l'orifice principal pour laquelle l'écoulement de l'eau chaude s'effectue uniquement par la série de trous et en laquelle il est maintenu pendant une durée déterminée dite de "mouillage" fixée par le dispositif de temporisation, soit une position d'ouverture, pour laquelle l'écoulement de l'eau chaude s'effectue alors par l'orifice principal et en laquelle il est maintenu pendant toute une durée dite "d'infusion" qui suit ladite durée de "mouillage".

Une cafetière équipée d'un clapet commandé de façon automatique est exposée dans DE-A-2932053.

Grâce au clapet temporisé, l'arrosage s'effectue, non seulement de façon progressive, mais aussi en deux régions différentes de la poudre de café, permettant, dans un premier temps, pendant la durée de "mouillage" de faire "gonfler" notamment la zone périphérique de cette masse de poudre de café, et dans un second temps, d'effectuer de façon classique, le "lessivage" de cette masse par sa région centrale, ces deux arrosages permettant ainsi d'extraire le maximum d'arôme de cette masse de poudre de café.

Les caractéristiques et avantages de l'invention ressortiront d'ailleurs de la description qui va suivre, à titre d'exemple, en référence au dessin annexé dans lequel :

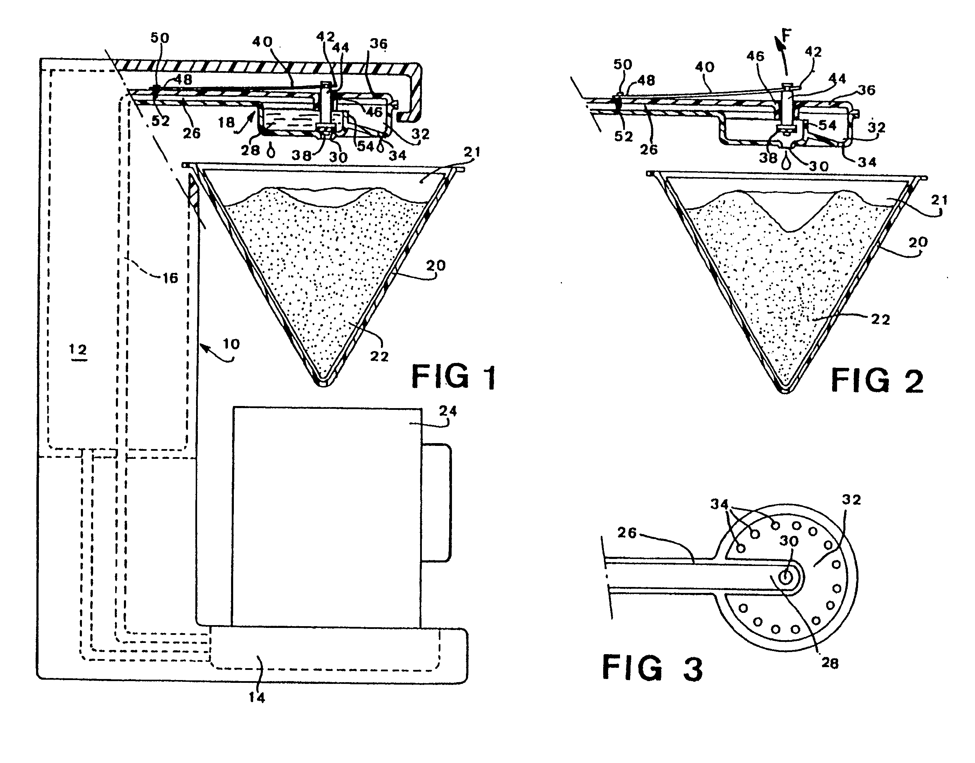

la figure 1 représente, partiellement en élévation et partiellement en coupe une cafetière selon l'invention avec la goulotte équipée d'un clapet en position d'obturation ; la figure 2 est une vue analogue à la coupe de la figure 1, illustrant notamment le clapet en position d'ouverture ; la figure 3 est une vue de dessus de la goulotte après enlèvement du couvercle de cette goulotte et du clapet.

La cafetière représentée à la figure 1 comprend, dans un boîtier 10, un réservoir d'eau froide 12, ainsi qu'un chauffe-eau 14 alimenté par ce réservoir et alimentant lui-même, par un tube d'eau chaude ascendant 16, une goulotte d'arrosage 18 destinée à arroser un filtre amovible 20 connu en soi, dont le fond est perforé et qui contient un élément filtrant 21 destiné à recevoir de la poudre de café 22.

Ce filtre est installé sur le boîtier 10 au moyen d'un dispositif quelconque non représenté, de manière à être fixé, en position de travail, sous le goulotte 18, et au-dessus d'un récipient 24 collecteur d'infusion. Comme on le voit mieux sur le figure 3, la goulotte 18 comprend un conduit horizontal 26 qui débouche dans un premier bassin 28 dont le fond présente un orifice principal 30 d'assez grand diamètre, ainsi qu'un second bassin 32 entourant partiellement le premier bassin 28 et présentant une série de trous 34 répartis autour de l'orifice 30 et ayant chacun un diamètre plus petit que le diamètre de l'orifice 30. Lesdits premier et second bassins 28-32 sont recouverts par un couvercle 36 qui constitue également la paroi supérieure du conduit 26. L'orifice principal 30 est destiné à arroser la région centrale du filtre 20, lorsque ce filtre est placé en position de travail, tandis que la série de trous 34 est destinée à arroser la zone périphérique de ce filtre 20.

Selon l'invention, la goulotte 18 est équipée d'un clapet 38 qui est commandé par un dispositif de temporisation 40 et qui peut occuper, soit une position d'obturation de l'orifice principal 30 (figure 1) pour laquelle l'écoulement de l'eau chaude s'effectue uniquement par la série de trous 34 et en laquelle il est maintenu pendant une durée déterminée dite de "mouillage" fixée par le dispositif de temporisation 40 (figure 1), soit une position d'ouverture, pour laquelle l'écoulement de l'eau chaude s'effectue alors par l'orifice principal 30 et en laquelle il est maintenu pendant toute une durée dite "d'infusion" qui suit ladite durée de "mouillage".

Le dispositif de temporisation 40 est constitué par un élément thermostatique tel qu'un bilame. Ce bilame présentant une forme oblongue est agencé longitudinalement sur le couvercle 36 de la goulotte et comprend une extrémité 42 reliée au clapet 38 au moyen d'un coulisseau 44 monté mobile verticalement, au-dessus de l'orifice 30, dans un palier 46 pratiqué dans ce couvercle 36, ainsi qu'une extrémité 48 fixée sur la paroi supérieure 36 du conduit 26 au moyen d'un organe de fixation 50 en matériau bon conducteur de la chaleur, tel que par exemple en métal, et dont une partie 52 fait saillie dans ce conduit 26 de manière à transmette directement la température de l'eau chaude au bilame 40.

Comme on le comprendra, dans la phase de mise en fonctionnement de la cafetière, le bilame 40 et le clapet 38 occupent leur position respective illustrée à la figure 1. Après quelques minutes de chauffage, l'eau chaude sortant du chauffe-eau 14 monte par le tube 16 et arrive par le conduit 26 dans le premier bassin 28. Le bilame 40 étant encore froid, maintient le clapet 38 en sa position d'obturation de l'orifice 30, et l'eau chaude remplissant ce bassin passe au-dessus de la paroi mitoyenne 54 et s'écoule ainsi, de façon régulière, dans le second bassin 32. Cette eau chaude, passant alors par la série de trous 34, arrose de façon régulière la zone périphérique de la poudre de café 22, puis chemine à travers cette poudre et la fait gonfler de façon progressive, pratiquement dans toute sa masse, depuis sa zone périphérique vers la région centrale.

Au cours de cet arrosage, le bilame est influencé par la température de l'eau chaude (95°C), non seulement détectée par la partie 52 de l'organe de fixation 50, mais aussi transmise par la paroi supérieure 36 de la canalisation 26. Il s'ensuit que le bilame 40 se déforme selon une direction orientée vers le haut (flèche F de la figure 2), et entraîne par son extrémité 42 le coulisseau 44, amenant ainsi le clapet 38 en sa position d'ouverture. Cette déformation du bilame jusqu'à la position d'ouverture du clapet détermine la durée de "mouillage" qui est de préférence de l'ordre d'une minute et trente secondes. Dès que le clapet passe à sa position d'ouverture et pendant toute la durée d'infusion, l'eau chaude s'écoule uniquement par l'orifice principal 30 et arrose de façon traditionnelle la poudre de café uniquement dans sa région centrale. Ainsi, grâce à ces deux arrosages successifs, on obtient un "lessivage" complet de la masse de poudre de café entraînant l'extraction maximum de l'arôme de cette poudre de café.

## Revendications

1. Cafetière ménagère comprenant, dans un boîtier (10), un réservoir d'eau froide (12) ainsi qu'un chauffe-eau (14) alimenté par ce réservoir et alimentant lui-même par un tube (16) d'eau chaude une goulotte d'arrosage (18) destinée à arroser un filtre (20-21) qui contient de la poudre de café (22) et qui est situé, en position de travail, sous cette goulotte, et au-dessus d'un récipient (24) collecteur d'infusion, ladite goulotte (18) présentant un orifice principal (30) destiné à arroser la région centrale du filtre (20-21) lorsque ce filtre est placé en position de travail, ainsi qu'une série de trous (34) répartis autour dudit orifice central (30) et destinés à arroser la zone périphérique dudit filtre, **caractérisée** en ce que la goulotte (18) est équipée d'un clapet (38) qui est commandé par un dispositif de temporisation (40) et qui peut occuper, soit une position d'obturation de l'orifice principal (30) pour laquelle l'écoulement de l'eau chaude s'effectue uniquement par la série de trous (34) et en laquelle il est maintenu pendant une durée déterminée dite de "mouillage" fixée par le dispositif de temporisation (40), soit une position d'ouverture, pour laquelle l'écoulement de l'eau chaude s'effectue alors par l'orifice principal et en laquelle il est maintenu pendant toute une durée dite "d'infusion" qui suit ladite durée de "mouillage".

2. Cafetière selon la revendication 1, **caractérisée** en ce que le dispositif de temporisation (40) est un élément thermostatique qui est agencé sur la goulotte (18) de manière à être influencé par la température de l'eau chaude dans cette goulotte.

3. Cafetière selon la revendication 2, **caractérisée** en ce que l'élément thermostatique (40) est un bilame de forme oblongue dont une extrémité (42) est reliée au clapet (38) au moyen d'un coulisseau (44) monté mobile verticalement dans un palier (46) solidaire de la goulotte (18) et dont l'autre extrémité (48) est fixée sur la paroi supérieure (36) de la goulotte au moyen d'un organe de fixation (50).

4. Cafetière selon la revendication 3, **caractérisée** en ce que l'organe de fixation (50) du bilame (40) comporte une partie (52) conductrice de la chaleur qui fait saillie dans la goulotte (18) de manière à transmettre directement la température de l'eau chaude au bilame (40).

5. Cafetière selon l'une quelconque des revendications précédentes, **caractérisée** en ce que la goulotte (18) comporte un premier bassin (28) dans lequel arrive directement l'eau chaude et dont le fond présente l'orifice principal (30), ainsi qu'un second bassin (32) entourant partiellement ledit premier bassin et présentant la série de trous (34), la hauteur de la paroi mitoyenne (54) des bassins étant telle qu'elle autorise le débordement de l'eau du premier bassin dans le second bassin.

## Patentansprüche

1. Haushalts-Kaffeemaschine, die in einem Gehäuse (10) einen Kaltwasserbehälter (12) sowie einen Wassererhitzer (14) aufweist, der von diesem Behälter gespeist ist und selbst durch ein Heißwasserrohr (16) eine Auslaufeinrichtung (18) speist, die zum Begießen eines Filters (20-21) dient, welcher Kaffeepulver (22) enthält und in der Betriebsstellung unter dieser Auslaufeinrichtung und oberhalb einer Kaffeekanne (24) angeordnet ist, wobei die Auslaufeinrichtung (18) eine Hauptöffnung (30) aufweist, die zum Begießen des Mittelbereichs des Filters (20-21) dient, wenn sich dieses Filter in der Betriebsstellung befindet, und eine Reihe von Löchern (34) rings um die zentrale Mittelöffnung (30) verteilt aufweist, die zum Begießen des Randbereichs des Filters dienen, dadurch gekennzeichnet, daß die Auslaufeinrichtung (18) mit einem Klappenventil (38) ausgerüstet ist, das von einer Verzögerungsvorrichtung (40) gesteuert ist und entweder eine Verschlußstellung der Hauptöffnung (30) einnehmen kann, in welcher der Auslauf des heißen Wassers einzig durch die Reihe von Löchern (34) erfolgt und in der es während einer bestimmten Zeitspanne, der sogenannten "Befeuchtungszeit" gehalten ist, die durch die Verzögerungsvorrichtung (40) festgelegt ist, oder eine Öffnungsstellung einnehmen kann, in welcher das heiße Wasser dann durch die Hauptöffnung ausläuft und in der es während der gesamten Spanne der sogenannten "Auslaugzeit" gehalten ist, die auf die Spanne der "Befeuchtungszeit" folgt.

2. Kaffeemaschine nach Anspruch 1, dadurch gekennzeichnet, daß die Verzögerungsvorrichtung (40) ein thermostatisches Element ist, das an der Auslaufeinrichtung (18) so angebracht ist, daß es durch die Temperatur des heißen Wassers in dieser Auslaufeinrichtung beeinflußt wird.

3. Kaffeemaschine nach Anspruch 2, dadurch gekennzeichnet, daß das thermostatische Element (40) ein längliches Bimetallblatt ist, von dem eine Ende (42) mit dem Klappenventil (38) mittels eines Schiebers (44) verbunden ist, der in einem mit der Auslaufeinrichtung (18) fest verbundenen Lager (46) senkrecht beweglich gehalten ist, und von dem das andere Ende auf der oberen Wand (36) der Auslaufeinrichtung mittels eines Befestigungselements (50) befestigt ist.

4. Kaffeemaschine nach Anspruch 3, dadurch gekennzeichnet, daß das Befestigungselement (50) des Bimetallblatts (40) einen Wärme leitenden Teil (52) aufweist, der in die Auslaufeinrichtung (18) so vorspringt, daß er die Temperatur des heißen Wassers unmittelbar auf das Bimetallblatt (40) überträgt.

5. Kaffeemaschine nach einem der vorangehenden Ansprüche, dadurch gekennzeichnet, daß die Auslaufeinrichtung (18) einen ersten Trog (28) aufweist, in den das heiße Wasser unmittelbar gelangt und dessen Boden die Hauptöffnung (30) aufweist, sowie einen zweiten Trog (32) aufweist, der den ersten Trog teilweise umgibt und die Reihe von Löchern (34) aufweist, wobei die Höhe der Trennwand (54) der Tröge so ist, daß Wasser aus dem ersten Trog in den zweiten Trog überlaufen kann.

itself supplying, through a hot water tube (16), a delivery spout (18) adapted to spray water on a filter (20-21) which contains coffee powder (22) and which is located, in the operating position, beneath this spout and above a receptacle (24) for collecting the infusion, the said spout (18) comprising a principal orifice (30), adapted to spray water on the central region of the filter (20-21) when the filter is placed in the operating position, and a series of holes (34) distributed around the said central orifice (30) and adapted to sprinkle water on the peripheral region of the said filter, characterized in that the spout (18) is provided with a valve (38) which is controlled by a delay device (40) and which may occupy either a position in which the principal orifice (30) is closed, in which position the flow of hot water occurs only through the series of holes (34) and in which it is held for a predetermined period, called the "wetting" period, fixed by the delay device (40), or an open position in which the flow of hot water then occurs through the principal orifice and in which it is held throughout a period, called the "infusion" period which follows the said "wetting" period.

2. A coffee maker according to claim 1, characterized in that the delay device (40) is a thermostaticelement which is arranged on the spout (18) in such a way as to be affected by the temperature of the hot water in this spout.

3. A coffee maker according to claim 2, characterized in that the thermostatic element (40) is an oblong bimetallic strip one end (42) of which is connected to the valve (38) by means of a sliding element (44) mounted to be movable vertically in a fixed bearing (46) in the spout (18) and the other end (48) of which is fixed to the upper wall (36) of the spout by means of a fixing element (50).

4. A coffee maker according to claim 3, characterized in that the element (50) for fixing the bimetallic strip (40) comprises a heat conducting part (52) which projects into the spout (18) in such a manner that it transmits the temperature of the hot water directly to the bimetallic strip (40).

5. A coffee maker according to any one of the preceding claims, characterized in that the spout (18) comprises a first chamber (28) into which hot water arrives directly, and the bottom of which comprises the principal orifice (30), and a second chamber (32) partially surrounding the said first chamber and comprising the series of holes (34), the height of the dividing wall (54) of the chambers being such that it allows overflow of water from the first chamber into the second chamber.

## Claims

1. A domestic coffee maker comprising, in a casing (10), a reservoir for cold water (12) and also a water heater (14) supplied from this reservoir and

FIG 2

FIG 3

FIG 1